# EUROPEAN PATENT SPECIFICATION

(11) **EP 2 137 088 B1**
(45) Date of publication and mention of the grant of the patent: **08.05.2013**
(21) Application number: 08736801.5
(22) Date of filing: 28.03.2008
(51) Int. Cl.: B65G 1/08, B65G 47/26, B65H 19/12

(54) **METHOD AND SORTING DECK FOR ROLLS WITH DIFFERING WIDTHS**
VERFAHREN UND SORTIERFLÄCHE FÜR ROLLEN MIT VERSCHIEDENEN BREITEN
PROCÉDÉ ET PLATEFORME DE TRI POUR DES ROULEAUX AVEC DIFFÉRENTES LARGEURS

(30) Priority: 30.03.2007 FI 20075219
(43) Date of publication of application: 30.12.2009
(73) Proprietor: Metso Paper, Inc., 00130 Helsinki (FI)
(72) Inventor: NIEMINEN, Esko, FI-05460 Hyvinkää (FI); SANTALA, Markku, FI-16600 Järvelä (FI); LINDBERG, Harri, FI-04430 Järvenpää (FI)
(74) Representative: TBK
(86) International application number: PCT/FI2008/050152
(87) International publication number: WO 2008/119886

(56) References cited:
- JP-A- 6 126 330
- US-A1- 2003 133 781
- US-A1- 2003 152 446

## Description

The present invention relates to a method, according to the preamble of claim 1, for transporting paper, board, or pulp rolls over a sorting deck.

The invention also relates to a sorting deck, according to the preamble of claim 6, for paper and board rolls, as well as a method for controlling the sorting deck.

Sorting decks are typically used in a paper-roll store for sorting paper and board rolls of different widths into queues according to width, diameter, or order batch. Sorting is usually carried out to facilitate the further processing of rolls by order batch. Each sorting deck is designed to receive rolls up to a maximum width and these sorting decks of different width are then placed next to each other. This creates a kind of roll matrix, which comprises several adjacent ramps, with rolls of approximately the same width being always stored on each ramp.

A set of ramps formed of several ramps naturally takes up quite a lot of space, which at times may not be fully used. Underutilization of the reserved space occurs particularly if rolls of only a certain width are manufactured. When wide rolls are being manufactured, the ramps for narrow rolls will be empty. When narrow rolls are being manufactured, there will be much empty space on the ramps, at the same time as there will be a lack of ramps.

JP-A-06 126330 shows a generic method according to the preamble of claim 1 for transporting paper, board or pulp rolls over a sorting deck, which comprises a plane for transporting the rolls and controllable stops for holding the rolls in place on the plane and releasing them to travel over the plane, wherein the stops are matrix-like positioned over the plane. Further, JP-A-06 126330 shows a generic sorting deck according to the preamble of claim 6 for paper, board or pulp rolls, comprising a plane for transporting rolls, a controller device arranged to control positions of stops and the controllable stops for holding rolls in place on the plane and releasing them to travel over the plane, wherein the stops are matrix-like positioned over the plane.

It is an object of the present invention to further develop a method for transporting rolls according to the preamble of claim 1 and a sorting deck for rolls according to the preamble of claim 6 such that the space along the sorting deck is more efficiently used.

The object of the present invention is achieved by a method for transporting rolls having the features of claim 1 and by a sorting deck for rolls having the features of claim 6.

Further advantageous developments according to the present invention are defined in the dependent claims.

According to an advantage of the present invention, a sorting deck/method is implemented, which is able to handle optionally both wide rolls and rolls of medium length placed adjacent to each other. Thus, the same sorting deck can be used for handling rolls of several widths not while all the rolls' widths necessarily need their own ramps.

A sorting deck/method is implemented by equipping the ramp with roll stops, which can be independently moved between the hold and release positions. With the aid of the independently controllable stops, freely selectable routes for the rolls are formed on the plane of the sorting deck. Thus the freely selectable routes can be altered as required and fixed routes for the rolls of different widths will no longer need to be reserved on the sorting deck.

This also means that, by suitably controlling the stops, the wide rolls can travel over several adjacent stops and several narrow rolls next to each other can be guided to the same ramp and guided with the aid of these adjacent stops.

Considerable advantages are gained with the aid of the invention, as the invention permits a more efficient use of space when using sorting decks and totalities formed from them. By using a single sorting deck, rolls of several widths can be handled, so that specific ramps for different roll widths may not be needed. In that case, the total surface area of the set of sorting decks can be reduced, as ramps need not be kept empty, even when rolls of only single width are manufactured for a longer period of time.

In the following, the invention is examined with the aid of examples and with reference to the accompanying drawings.
Figure 1 shows a top view of a sorting deck according to one embodiment.
Figure 2 shows the sorting deck of Figure 1, in one possible operating situation.
Figure 3 shows the sorting deck of Figure 1, in a second possible operating situation.
Figure 4A shows a cross-sectional side view of the lower end of a sorting deck according to a second embodiment.
Figure 4B shows an enlargement of the stop shown in Figure 4A.
Figure 5 shows a top view of the sorting deck of Figure 4A, in one possible operating situation.
Figure 6 shows a top view of the sorting deck of Figure 4A, in a second possible operating situation.
Figure 7 shows a top view of the sorting deck of Figure 4A, in a third possible operating situation.
Figure 8 shows the sorting deck of Figure 1, in a third possible operating situation.

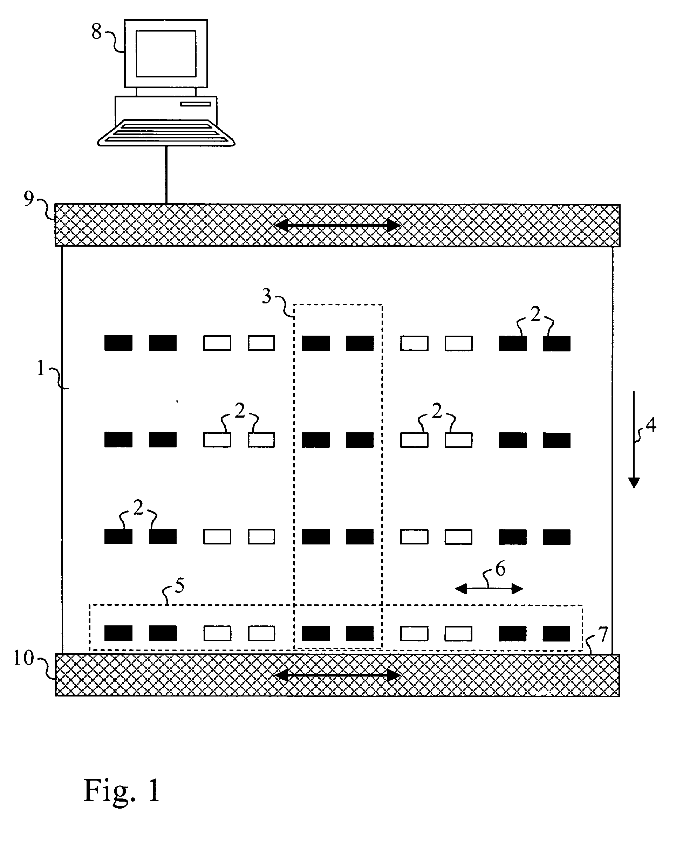

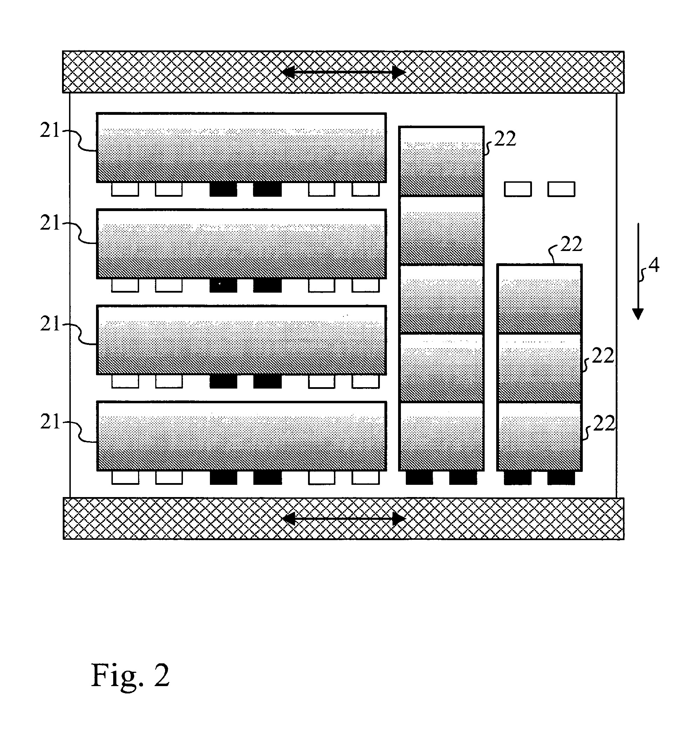

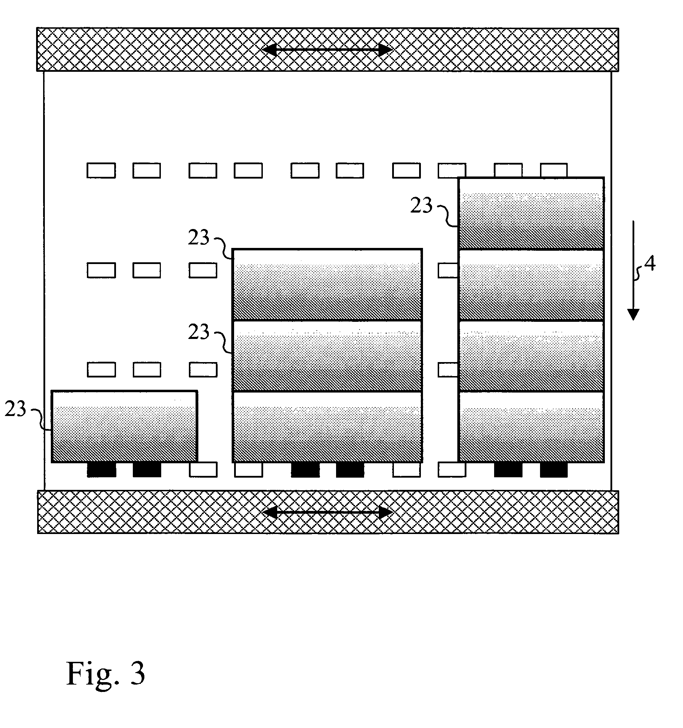

Figure 1 shows a sorting deck for paper and board rolls, according to one embodiment. The same sorting deck is also shown in different operating situations in Figures 2 and 3. The sorting deck of the figure is connected between conveyors 9 and 10, in such a way that, with the aid of the conveyor 9, rolls for sorting can be brought to the upper end of the sorting deck while correspondingly the sorted rolls can be guided onto the conveyor 10 at the lower end of the ramp, where there is also the lower edge 7 of the ramp. The sorting deck comprises an inclined plane 1 between the upper end and lower end, along which plane the rolls can be rolled. In addition, the sorting deck comprises controllable stops 2 for holding the rolls on the inclined plane 1 in place on the inclined plane and releasing them to roll along the inclined plane 1. As shown in Figure 1, the stops 2 are placed to form at least one line 3 of stops, in which the stops 2 are located consecutively in the longitudinal direction 4 of the inclined plane 1. In the embodiment of Figure 1, the stops actually form five parallel lines 3 of stops.

Figure 1 also shows four rows 5 of stops set consecutively in the longitudinal direction 4, in which the stops 2 are positioned adjacently to each other along the transverse direction 6 of the inclined plane 1. There should be at least one such row and it would be desirable for at least one of the rows to be located close to the lower edge 7 of the sorting deck. Close to the lower edge 7 means that the shortest distance between the lower edge 7 and the stop 2 is typically in the order of magnitude of the diameter of the roll being handled, for example, 0.5 - 2-times the diameter of a typical roll. This distance can thus be, for example, less than 3 metres, for example, in the range 0.5 - 2 metres. In this way the use of space on the sorting deck is kept efficient. On the other hand, it is desirable if the distance is large enough for the conveyor 10 to be able to carry rolls, even when the stop 2 is in the hold position.

In the embodiment of Figure 1, the stops 2 are arranged to be independently moveable between the hold and release positions. The stops being independently moveable means that each stop can be controlled independently of the other stops and their positions. The hold position refers to the operating element of the stop 2, arranged for the purpose, being in a position in which it prevents the roll from rolling along the plane 1 over the stop 2. The release position, for its part, means that the operating elements of the stop 2 do not prevent the roll from rolling over the stop 2. In Figures 1 - 3, the stops 2 in the hold position are shown by black rectangles depicting the stops. Correspondingly, the stops 2 in the release position are shown by white rectangles depicting the stops.

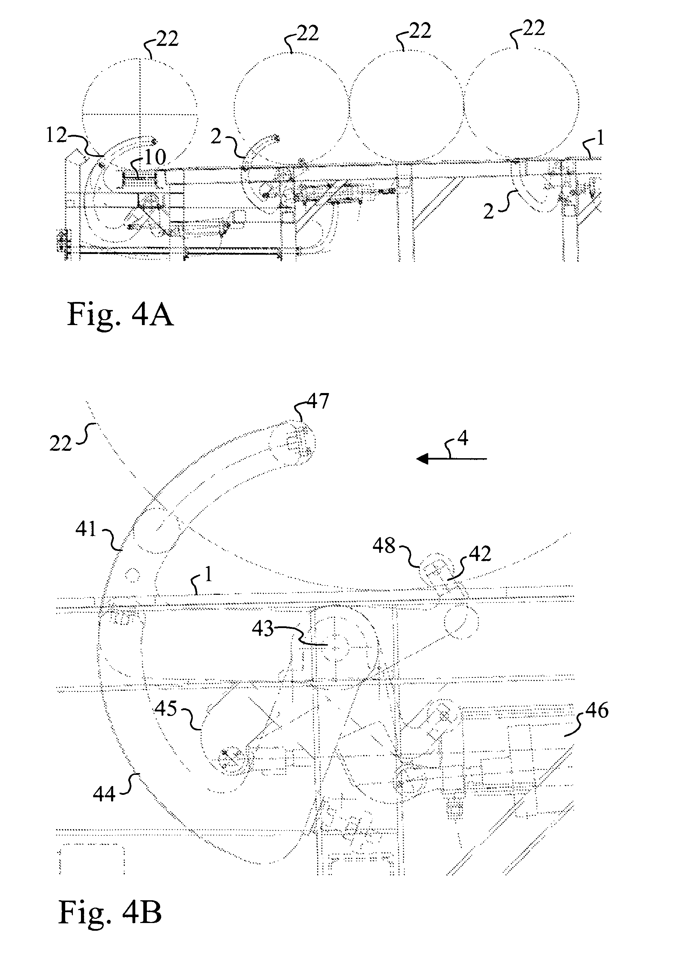

The stop itself can be any kind of stop whatever suitable for the purpose, but in the preferred embodiment at least each stop of the row of stops closest to the lower edge 7 comprises a collector and feeder, which are located at a distance from each other in the longitudinal direction 4 and both of which can be moved freely between the hold and release positions. The stop can then be used not only to prevent the rolling of the rolls and permit free rolling, but also optionally to permit only one roll at a time to cross the stop 2. One example of such a stop 2 is shown in greater detail in connection with Figure 4.

In addition, Figure 1 shows a controller device 8, with the aid of which the stops 2 are moved between the hold and release positions. The controller device 8 can be, for example, a suitably programmed computer, which is connected to the stops' 2 operating devices.

With reference to Figure 1, it can be generally stated that the sorting deck should include at least one line 3 of stops. In the line of stops, there must be at least two stops 2, usually at least three stops. The number of stops is not otherwise limited and a suitable number can be, for example, between 2 and 10. Correspondingly, the sorting deck should comprise at least one row 5 of stops, in which there are at least two stops 2, and usually at least three stops. The number of adjacent stops is also in no way limited, a suitable number being, for example, between 3 and 15.

In the embodiment of Figure 1, the stops 2 form a matrix, in which there are five lines and four rows. The stops can also be set in the form of a matrix, in which case some of the rows and/or lines will contain fewer stops than in the row, or correspondingly line, containing the most stops. In that case, some of the stops contained in a complete matrix will, as it were, be lacking from the sorting deck. Matrix-like positioning can also mean that the stops are located in freely selected positions over the plane, in such a way that they do not form rows or lines. In the matrix-like positioning of stops, the essential feature is thus only that the stops are located in different positions over the plane, in such a way that rolls of different widths can be guided with their aid.

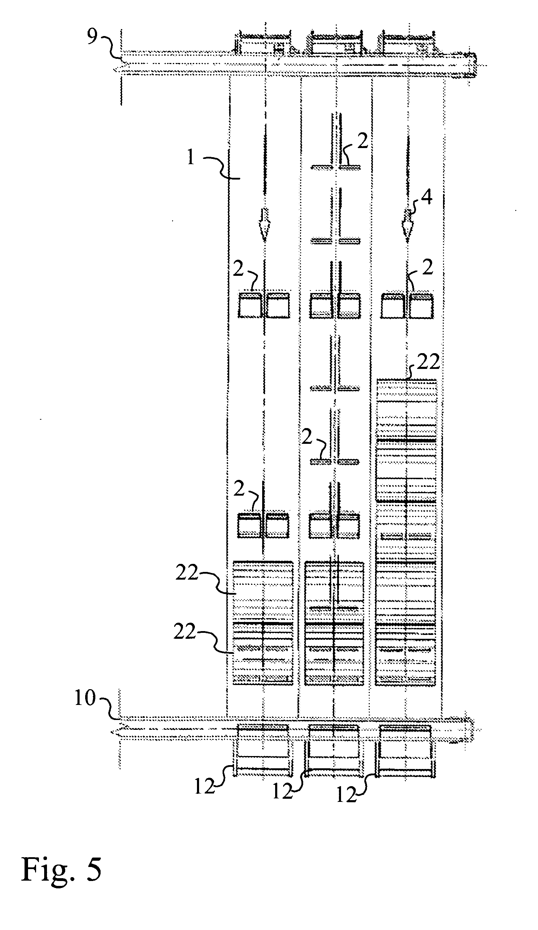

Figures 5 - 7 show one possible matrix-like sorting deck, in which the central line comprises eight stops 2 and the left-hand and right-hand lines each comprise three stops 2. In other words, the sorting deck of Figures 5 - 7 comprises three parallel lines of stops and also three rows of stops and, in addition, five stops in the central line, which do not belong to any row of stops.

In the operating situation shown in Figure 2, four wide rolls 21 has been received at one edge of the sorting deck. For this purpose, the stops of the first and third lines from the left have been moved entirely to the release position, so that the ends of the wide rolls can freely roll over them. On the other hand, the stops of the second line from the left are used to hold the wide rolls 21, so that each roll is held by its own stop. The use of its own stop for each roll is based on the assumption that wide rolls are typically so heavy that it is best not to lower them against each other on the sorting deck. The wide rolls can be guided as required one at a time to the lower-edge conveyor 10, and after this the upper rolls released one at a time to roll down onto the next stop.

In the operating situation shown in Figure 2, narrow rolls 22 have been received in the fourth and fifth lines from the left of the sorting deck. The narrow rolls of the example are so light that they can be allowed to be supported on each other on the sorting deck. This saves space, as more rolls will fit into the line in this way. For this purpose, only the lowest stops of the lines are moved to the hold position, the other stops being entirely in the release position. The narrow rolls 22 can now be guided as required to the lower-edge conveyor 10 one at a time, in which case the next roll in the line will always descend onto the stop. For operation of this kind, however, there must be a function in the stop, which permits one roll at a time to be released. Feeding operation of this kind is described above and one example of such a stop is described in greater detail in connection with Figure 4.

In the operating situation shown in Figure 3, rolls 23 of medium width are being handled, which are wider than the lateral intervals of the stops, but not, however, so heavy that they would require to be held individually, each on its own stop. In the operating situation of the figure, the third and fourth lines of stops from the left are moved entirely to the release position and the movement of the medium-width rolls from the sorting deck onto the conveyor 10 is controlled with the aid of the first, third, and fifth stops from the left of the lower stop row, in a manner corresponding to that described above in connection with the handling of the narrow rolls.

Figure 4A shows a cross-sectional side view of the lower end of a sorting deck according to a second embodiment. The sorting deck according to this embodiment too comprises an inclined plane 1 and controllable stops 2 for holding the rolls in place and releasing them to roll along the plane 1. The rolls of the figure are narrow rolls 21. The figure also shows the lower-end conveyor 10, as well as a transfer device 12 akin to stops 2 for placing the rolls onto the conveyor 10. The transfer devices 12, or some other corresponding operating elements are usually also used in the embodiment shown in Figures 1 - 3.

Figure 4B shows the stop shown in the cross-section side view of Figure 4A in greater detail. Similar stops can also be used in connection with the embodiment shown in Figures 1 - 3. The stop comprises a collector 41 and a feeder 42, which are set at a distance from each other in the longitudinal direction 4. In corresponding known stops, the collector 41 and the feeder 42 have been in a fixed arrangement to each other, in such a way that, when the collector 42 is moved to the release position, the feeder 42 rises to the hold position. This arrangement has been intended to ensure that only one roll can pass the stop with a single operating movement of the stop from the hold position to the release position, even though the next roll would already be resting on this roll on the sorting deck. In such a situation, the next roll remains resting on the feeder 42 that has risen to the hold position, and is not been allowed to pass the stop.

The stop of Figure 4B differs from a known stop in that both the collector 41 and the feeder 42 can be moved freely between the hold and release positions, so that the rolling of the rolls over the stop 2 can be optionally prevented, freely permitted, or permitted one roll at a time. This permits wide rolls 21 to be guided with the aid of the stops of only one line 3, even though the rolls would travel over several adjacent stops 2. In that case, both the collector 41 and the feeder 42 in the adjacent stops are moved to their release positions. In the manner described above, when guiding wide rolls, the feeders of the stops guiding the rolls too can, if desired by kept in the release position the whole time, as each roll 21 is held with the aid of its own stop 2.

The collector 41 and feeder 42, which can be controlled freely and independently of each other, can be implemented, for example, in the manner shown in Figure 4B or in another suitable manner.

In the embodiment of Figure 4B, the collector 41 is arranged to be partly rotatable around a shaft 43. The collector comprises an arm 44, which, when the collector rotates in the first direction, is arranged to rise above the plane 1 to the hold position, thus preventing the roll 22 from moving, and, when the collector is rotated in the second direction, to drop to or below the level of the plane 1, to the release position, when the roll 22 can move over the collector. To rotate the collector 41, the collector 41 comprises an operating arm 45 and a hydraulic cylinder 46 connected to it. The hydraulic cylinder 46 can also be connected directly to the arm 44, in which case a separate operating arm 45 will not be needed, but the use of an operating arm 45 allows the rotating movement of the collector 41 and the operating movement of the hydraulic cylinder 46 to be more easily adapted to each other and the positioning of the hydraulic cylinder 46 in the device to be selected more freely. In addition, the figure shows a roller 47 fitted rotatably to the end of the arm 44.

In the embodiment of Figure 4B, the feeder 42 is implemented in the same way as the collector 41, but is located on the opposite side of the shaft 43. The feeder 42 is typically located before the collector 41 in the longitudinal direction of the inclined plane 1. In the example of Figure 4B, the feeder 42 is arranged to rotate partly around the same shaft 43, around which the collector 41 can also be rotated. As in the collector 41, the feeder 42 of Figure 4B comprises an arm, to the end of which a roller 48 is fitted rotatably. In an operation that is the reverse of that of the collector 41, the arm of the feeder 42 is arranged in such a way that, when the feeder 42 is rotated in the first direction, the arm sinks to the release position on or below the level of the plane 1, whereby the roll 22 can move over the feeder 42, and, when the feeder 42 is rotated in the second direction, the arm rises above the plane 1 to the hold position, preventing the movement of the roll 22. Like the collector 41, the feeder 42 comprises an operating arm and a hydraulic cylinder connected to it to rotate the feeder 42. Here too, the separate operating arm 45 can, of course, be replaced with another arrangement. Figure 5 shows a top view of the sorting deck of Figure 4A. Figure 5 shows the inclined plane 1 and stops 2 in the release and hold positions. The figure also shows the upper-end conveyor 9 and the lower-end conveyor 10, as well as the longitudinal direction 4 between them. The figure also shows transfer devices 12. In the embodiment of Figure 5, the stops 2 form in fact three adjacent lines of stops, in such a way that in the central line there is a closer spacing of a total of eight stops while in the left-hand and right-hand lines there are three stops in each, set at a greater distance apart. There are three rows of stops 2 in the sorting deck of Figure 5.

In connection with both the collector 41 and the feeder 42, the hydraulic cylinders can naturally be replaced with some other suitable operating device, for example, with a pneumatically or electrically driven operating device. One example is the use of an electric motor to move the collector 41 and/or the feeder 42.

The distance between the consecutive stops 2 in the longitudinal direction 4 is typically greater that the diameter of the paper or board rolls being handled. Thus the distance is great enough for at least one of the paper or board rolls being handled to be located between consecutive stops 2. On the other hand, the distance between the collector 41 and the feeder 42 contained in the stop 2 is less than the diameter of the paper or board rolls typically being handled, so that normally one stop 2 at a time can be in direct contact with only one paper or board roll. The distance between the consecutive stops 2 is usually greater than 1.5 metres and generally at least 2 metres. The distance between the collector 41 and the feeder 42, on the other hand, is usually less than 1.5 metres.

Figure 5 shows a top view of the sorting deck of Figure 4A. Figure 5 shows the inclined plane 1 and stops 2 in the release and hold positions. The figure also shows the upper-end conveyor 9 and the lower-end conveyor 10, as well as the longitudinal direction 4 between them. The figure also shows transfer devices 12. In the embodiment of Figure 5, the stops 2 form in fact three adjacent lines of stops, in such a way that in the central line there is a closer spacing of a total of eight stops while in the left-hand and right-hand lines there are three stops in each, set at a greater distance apart. There are three rows of stops 2 in the sorting deck of Figure 5.

In the operating situation shown by Figure 5, narrow rolls 22 have been received on the three parallel lines of the sorting deck. The narrow rolls of the example are so light that they can be allowed to be supported on each other on the sorting deck and the feed of the rolls 22 forwards to the lower-end conveyor 10 can be controlled with the aid of the lowest row of stops. However, the rolling of the rolls 22 coming to the lines from the upper-end conveyor 9 can be slowed with the rows of the uppermost stops, which is why, in the operating situation of the figure, the upper stops are also shown as having being moved to the hold position.

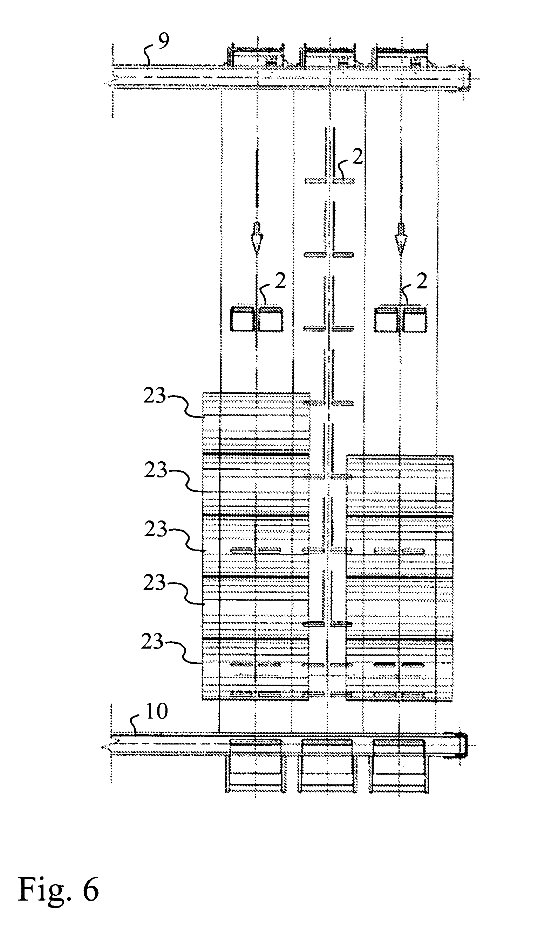

Figure 6 shows the sorting deck of Figure 5 in a second operating situation. In the operating situation of Figure 6, the rolls 23 being handled on the sorting deck are of medium width, and are wider than the lateral interval of the stops 2, but not, however, so heavy that they need to be supported individually, each on its own stop. In the operating situation of the figure, the central line of stops is moved entirely to the release position and the transfer of the medium-width rolls from the sorting deck to the conveyor 10 is controlled with the aid of the outer lowest row of stops. In addition, in the case shown in connection with Figure 5, the aid of the upper stops 2 is used to prevent the speed of the rolls 23 rolling from the upper-end conveyor 9 to the line from increasing excessively.

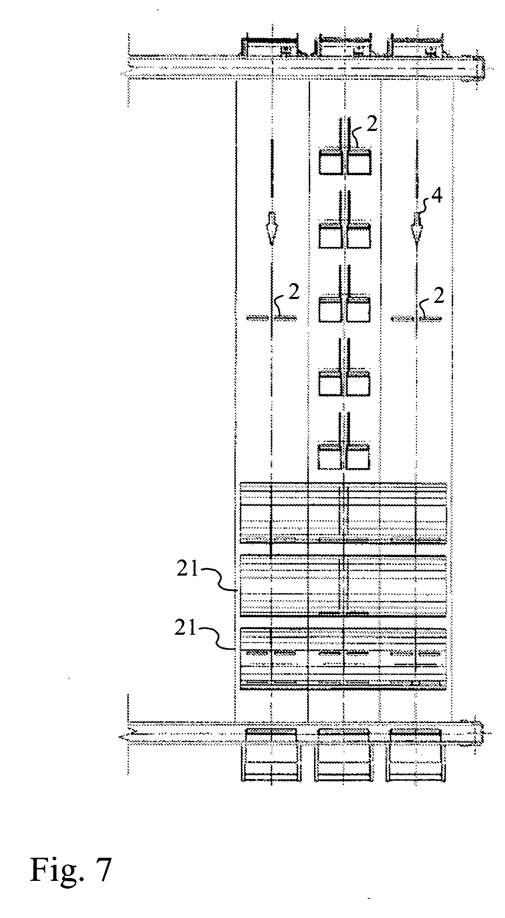

Figure 7 shows sorting deck of Figure 5 in a third operating situation. In the operating situation of Figure 7, wide rolls 21 are being handled on the sorting deck, and are so heavy that there is reason to hold each roll individually on its own stop 2 and release them to roll for a longitudinal distance of only one stop at a time. The rolls 21 are controlled with the aid of the stops 2 of the central line, the stops of the outer lines being moved entirely to the release position. The concept 'entirely to the release position' refers in this case to the fact that, in the case of a dual-acting stop, both the collector 41 and the feeder 42 are in the release position.

According to the invention, the control of the sorting deck is implemented with the aid of a suitable controller device 8, with the aid of which the stops 2 are moved in such a manner that wide rolls 21 can be rolled along the sorting deck, and that when they roll they extend over two or more adjacent stops 2, and optionally two or more parallel lines of narrow rolls 22, the width of which corresponds to about half or a smaller fraction of the width of the said wide rolls 21, can be rolled over these same adjacent stops 2. In the examples of the figures, the width of the narrow rolls is about one third or slightly less than one third of the width of the wide rolls. These widths can of course vary freely within the limits set by the width of the sorting deck and the practical minimum width of the roll. With suitable control, the sorting deck can handle all of those widths.

The division of the width of the rolls, described above, into fractions of approximately the same size and multiples of them permits, however, a highly efficient use of space and a high degree of utilization of the sorting deck, which are important if the ramp is used as a temporary roll store. Thus a wide roll can also travel over more than three adjacent stops. In the following, however, the control is described with the aid of precisely such an embodiment that is very important in practice, in which the width of the narrow rolls is about one third of the width of the wide rolls. In this case, the width of the narrow rolls is, for example, less than 1400 mm, the width of the medium-width rolls is, for example, 1400 - 2500 mm, and the width of the wide rolls is more than 2500 mm, for example, 2500 - 4850 mm. In a second exemplary division, the width of the narrow rolls is less than 1400 mm, the width of the medium-width rolls is, for example, 1400 - 2250 mm, and the width of the wide rolls is more than 2250 mm, for example, 2250 - 4850 mm.

The sorting decks of Figures 1 - 3 and 5 - 7 comprise stops 2 located consecutively in three parallel lines in the longitudinal direction 4, i.e. in a centre line, a left-hand line, and a right-hand line. However, the embodiments have the difference that, in the sorting decks of Figures 1 - 3, the possible centre lines are all three of the lines in the centre. Thus the left-hand line is always the line nearest the left-hand side of the selected centre line and the right-hand line is always the line nearest the right-hand side of the selected centre line. In this connection, there is as such practically no significance in the examination of the left and right directions, as the left-hand and right-hand lines are both controlled in the same way.

In the situation described above, the controller device 8 can be programmed in such a way that
- when handling wide rolls 21, the controller device 8 move the stops 2 of the left-hand and right-hand lines to the release position (entirely to the release position, if the stop is dual-acting, as in Figure 4B) and moves the stops 2 of the centre line between the hold and release positions, in order to hold the wide rolls 21 in turn in place and in turn to release them to roll along the plane 1, in which case the rolls will roll in a single line over the stops 2 of the centre line, the left-hand line, and the right-hand line,
- when handling medium-width rolls 23, the controller device 8 moves the stops 2 of the centre line to the release position and the stops 2 of the left-hand and right-hand lines between the hold and release positions, in order to hold the medium-width rolls 23 in place and to release them to roll in two parallel lines along the plane 1, and
- when handling narrow rolls 22, the controller device 8 moves the stops 2 of each line between the hold and release positions, in order to hold the narrow rolls 22 in place and to release them to roll in three parallel lines along the plane 1.

If, in the example described above, dual-acting stops are used, the release of the medium-width and narrow rolls can be performed in such a way that the feeder is moved to the hold position at the same time as the collector is moved to the release position. In that case the rolls will be allowed to proceed over the stop one at a time.

Correspondingly, it is also possible to implement a method for controlling the sorting deck, in which, when handling wide rolls 21:
- the stops 2 of the adjacent, i.e. left-hand and right-hand lines are moved to the release position,
- the wide rolls 21 are brought to the ramp positioned in such a way that the centre line of the roll is essentially aligned with the centre line 3 of stops, and
- the stops 2 of the centre line are moved between the hold and release positions, in such a way that the wide rolls 21 roll one at a time from stop to stop, down to the lower edge 7 of the sorting deck.

Further, a method can be implemented, in which, when handling narrow rolls 22:
- a suitable line 3 is selected for each roll 22,
- the rolls 22 are brought one at a time to the ramp positioned in the longitudinal direction in such a way that the roll coincides with the selected line,
- the rolls 22 are allowed to roll towards the lower edge of the sorting deck, and
- the lowest adjacent stops 2 are moved between the hold and release positions, in such a way that the narrow rolls are transferred one at a time off the sorting deck.

In addition, in the method, the rolling of the rolls 22 can be slowed with the aid of the stops, before the rolls meet the previous roll or the lowest stop.

In the operating situations described above, rolls of essentially the same width are always guided to one line. However, this is in no way essential; instead if desired, routes independent of these lines along the sorting deck can be selected for the rolls. Thus, with the aid of the invention, it is indeed possible to implement a method for moving paper and board rolls along a sorting deck, in which method
- rolls and the width data of each roll are received,
- longitudinal routes on the sorting deck are selected for the rolls, exploiting the width data,
- the rolls are brought to the roll lines formed on the selected routes, and
- the stops (2) are moved between the hold and release positions, in such a way that the rolls are moved along the sorting deck according to the selected routes.

The width data of the rolls can be received, for example, directly from the equipment preceding the sorting deck in the production line, from a separate measuring device, or from a marking located on the roll, such as a memory chip, barcode, or RFID sticker. The sorting deck can also be equipped with a measuring device, which can be used to determine the width of the roll being received.

When receiving narrower and wider rolls, these can be guided optionally either along the same longitudinal-direction routes, or, for example, along parallel routes, as in the examples described above. The narrower rolls can also be moved in parallel with a wider roll over essentially the same route. If it is desired to make the use of space in the sorting deck efficient, so that the greatest possible number of rolls of different width being received will fit onto the ramp, the routes of the rolls are optimized in such a way as to minimize the empty space remaining between the rolls.

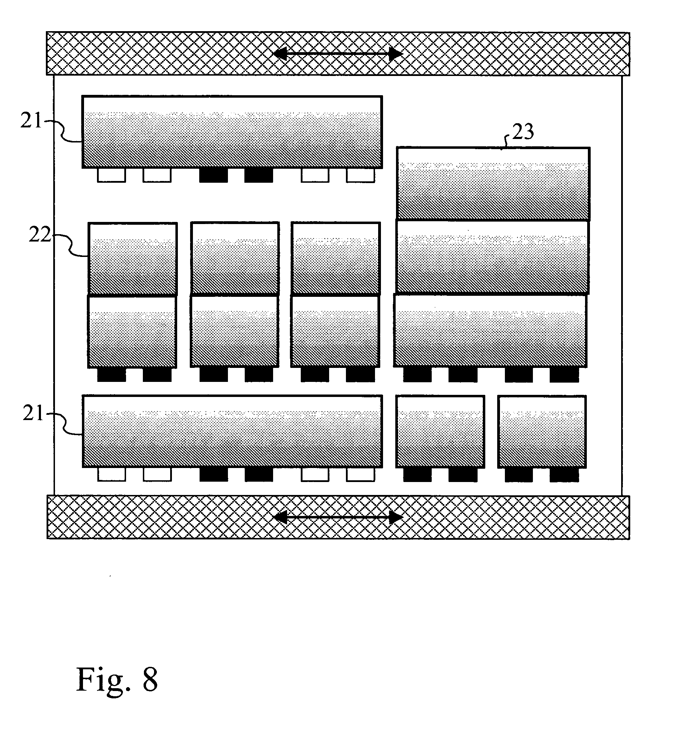

Figure 8 shows one such operating situation, in which rolls 21, 22, 23 of different widths have been guided onto the sorting deck according to Figure 1, to consecutive and parallel routes.

The aforementioned embodiments can be modified in several different ways, for example, so that some of the stops 2 are replaced by retarders, which are designed to slow the rolling of the roll, but not, however, to stop it. The stops to be replaced can be the stops used in the embodiments described above for slowing the rolling of the narrow and medium-width rolls, i.e. in practice all the other stops in the outermost lines of stops on the sorting deck, except the lowest stops. The retarder can be an operating device with its construction like that of the collector 41 shown in Figure 4B, for example, the sinking of which to the release position is slowed when the rolling roll meets the retarder. The slowing can be implemented, for example, with the aid of a hydraulic cylinder, or a pneumatically or electrically operated operating device. In a quite similar manner the stops described in connection with the embodiments of Figures 1 - 7 can be used in a retarder mode, in which case the stop moves from the hold position to the release position in response to the load caused by the rolling roll and at the same time slows the speed of the roll.

The plane 1 also need not be inclined; instead the plane 1 can be essentially horizontal. In that case, the kinetic energy required to move the rolls is transmitted to the rolls with the aid of an operating device, such as a pusher. If desired, the operating device can be integrated in the stop solution, or separate operating devices can be used.

The rolls can also be transported along the plane 1 using bases, such as cradles, in which case the rolls will not roll along the plane 1. The base can travel along the inclined plane by gravity, or the base or roll on the base can be acted on by an operating device, in order to transport the roll along the plane.

The sorting deck can also be designed in such a way that the rolls are fed to the ramp and guided off the ramp from the same edge of the ramp. In that case, the examples described above can be modified, for example, in such a way that the plane 1 is set to an essentially horizontal position and the ramp is equipped with operating devices, which provide the rolls with the necessary kinetic energy. If it is wished to fill and empty such a ramp from one edge, one of the conveyors 9 and 10 can be omitted. Of course the ramp can also be filled and emptied from both edges, in which case both of the conveyors 9 and 10 can be used to both bring rolls to the ramp and to remove rolls from the ramp.

On the basis of the examples described above, it is obvious that numerous solutions differing from the embodiments described above can be implemented which fall within the scope of the invention as defined by the accompanying claims.

## Claims

1. Method for transporting paper, board, or pulp rolls (21-23) over a sorting deck, which comprises a plane (1) for transporting the rolls (21-23) and controllable stops (2) for holding the rolls (21-23) in place on the plane (1) and releasing them to travel over the plane (1), wherein the stops (2) are matrix-like positioned over the plane (1), the method being **characterized by** comprising the steps of
forming freely selectable routes in the longitudinal direction (4) of the plane (1) on the plane (1) of the sorting deck with the aid of the stops (2) by operating the stops (2), forming roll lines of rolls (21-23) of different widths on the routes, wherein wide rolls (21, 23) extend over two or more adjacent stops (2) in the lateral direction, and moving the stops (2) independently between their hold and release positions along said freely selectable routes in the longitudinal direction of the plane (1) such that wide rolls (21, 23) can travel over the adjacent stops forming one of said longitudinal routes and several narrow rolls (22) next to each other can be guided to the same longitudinal route and guided with the aid of these adjacent stops along said route.

2. Method according to claim 1, **characterized in that**
- rolls and width data of the rolls (21-23) are received,
- routes in the longitudinal direction (4) of the sorting deck are selected for the rolls (21-23), exploiting the width data,
- the rolls (21-23) are brought to roll lines formed on the selected routes, and
- the stops (2) are moved between the hold and release positions, so that the rolls (21-23) are transported over the sorting deck according to the selected routes.

3. Method according to claim 1 or 2, **characterized in that** the wide rolls (21, 23) and narrowe rolls (22) are received and the wide rolls (21, 23) and narrow rolls (22) are transported consecutively over essentially the same longitudinal route.

4. Method according to any of claims 1-3, **characterized in that** rolls (21-23) belonging to at least three different width groups are received, and when selecting the routes of the rolls (21-23) the empty space remaining between the rolls (21-23) on the sorting deck is attempted to be minimized.

5. Method according to any of claims 1-4, **characterized in that**, when selecting the route for a roll, a check is made as to whether the stops (2) form a suitable route for a roll of the width of the roll in question and, if the stops (2) do not form a suitable route, the stops (2) are moved in such a way that a suitable route is formed on the sorting deck for the roll in question.

6. Sorting deck for paper, board, or pulp rolls (21-23), comprising a plane (1) for transporting rolls (21-23), a controller device (8) arranged to control positions of stops (2) and the controllable stops (2) for holding rolls (21-23) in place on the plane (1) and releasing them to travel over the plane (1), wherein the stops (2) are matrix-like positioned over the plane (1),
**characterized in that**
the controller device (8) is programmed to control the stops (2) to independently move the stops (2) between their hold and release positions to form freely selectable routes for rolls (21-23) of different widths on the plane (1) to transport said rolls (21-23) of different widths over the plane (1) along said freely selectable routes in the longitudinal direction (4) of the plane (1) such that wide rolls (21, 23) extending over two or more adjacent stops (2) in the lateral direction (6) of the plane (1) can travel over the adjacent stops forming one of said longitudinal routes and several narrow rolls (22) next to each other can be guided to the same longitudinal route and guided with the aid of these adjacent stops along said route.

7. Sorting deck according to claim 6, **characterized in that** at least one row (5) of stops (2) is located close to the lower edge (7) of the sorting deck and **in that** each stop (2) comprises a collector (41) and a feeder (42), which are located at a distance from each other in the longitudinal direction (4) and both of which can be freely moved independently of each other between the hold and release positions, so that the movement of the rolls (21-23) over the stop (2) can be optionally prevented, freely permitted, or permitted one roll at a time.

8. Sorting deck according to claim 6 or 7, **characterized by** the controller device (8), which is programmed to control the stops (2) in such a way that narrow rolls (22), the width of which is correspondingly one half or a smaller fraction of the width of the said wide rolls (21), can be correspondingly transported over these same stops (2) in two or more parallel lines.

9. Sorting deck according to any of claims 6-8, **characterized in that** the stops (2) are arranged to form at least one line (3) of stops, in which the stops (2) are arranged consecutively in the longitudinal direction (4)

10. Sorting deck according to any of claims 6-9, **characterized in that** at least one row (5) of stops (2) is located close to the lower edge (7) of the sorting deck, which row (5) comprises at least two, preferably at least three independently controllable stops (2).

11. Sorting deck according to any of claims 6-10, **characterized in that** the plane (1) is inclined.

12. Sorting deck according to any of claims 6-11, **characterized in that** it comprises pushers for moving the rolls (21-23) on the plane (1).

13. Sorting deck according to any of claims 6-12, **characterized in that** it comprises stops (2) located consecutively in the longitudinal direction (4) in at least three parallel lines, i.e. a centre line, a left-hand line, and a right-hand line.

14. Sorting deck according to claim 13, **characterized in that** the controller device (8) is programmed to control the stops (2) for handling wide (21), medium-width (23) and narrow rolls (22), in such a way that
- when handling wide rolls (21), the controller device (8) moves the stops (2) of the left-hand and right-hand lines to the release position and moves the stops (2) of the centre line between the hold and release positions, in order to hold the wide rolls (21) in turn in place and in turn to release them to travel over the plane (1), so that the rolls (21-23) travel in a single line over the stops (2) of the centre line, the left-hand line, and the right-hand line, which have been moved to the release position,
- when handling medium-width rolls (23), the controller device (8) moves the stops (2) of the centre line to the release position and moves the stops (2) of the left- hand and right-hand lines between the hold and release positions, in order to hold the medium-width rolls (23) in place and to release them to travel over the plane (1) in two parallel lines, and
- when handling the narrow rolls (22), the controller device (8) moves the stops (2) of each line between the hold and release positions, to hold the narrow rolls (22) in place and to release them to travel over the plane (1) in three parallel lines.

15. Sorting deck according to any of claims 6-14, **characterized in that** it comprises retarders located in the same way as the stops (2), for slowing the speed of the rolls (21, 23) rolling over the inclined plane (1).

## Patentansprüche

1. Verfahren zum Transportieren von Papier-, Karton- oder Faserstoffrollen (21-23) über eine Sortierungsplattform, die eine Ebene (1) zum Transportieren der Rollen (21-23) und steuerbare Anschläge (2) zum Halten der Rollen (21-23) an einer Stelle auf der Ebene (1) und zum Freigeben der Rollen zum Bewegen über die Ebene (1) aufweist, wobei die Anschläge (2) matrixartig über die Ebene (1) positioniert sind, wobei das Verfahren durch die folgenden Schritte gekennzeichnet ist:
Ausbilden von frei auswählbaren Routen in der Längsrichtung (4) der Ebene (1) auf der Ebene (1) der Sortierungsplattform mit Hilfe der Anschläge (2) durch Betätigen der Anschläge (2), Ausbilden von Rollbahnen für Rollen (21-23) mit verschiedenen Breiten auf den Routen, wobei sich breite Rollen (21, 23) über zwei oder mehr benachbarte Anschläge (2) in der Querrichtung erstrecken, und unabhängiges Bewegen der Anschläge (2) zwischen deren Halte- und Freigabepositionen entlang den frei auswählbaren Routen in der Längsrichtung der Ebene (1) derart, dass sich die breiten Rollen (21, 23) über die benachbarten Anschläge bewegen können, die eine der Längsrouten ausbilden, und verschiedene schmale Rollen (22) nebeneinander auf derselben Längsroute geführt werden können und mit Hilfe dieser benachbarten Anschläge entlang dieser Route geführt werden.

2. Verfahren nach Anspruch 1, **dadurch gekennzeichnet, dass**
- Rollen- und Breitendaten der Rollen (21-23) aufgenommen werden,
- Routen in der Längsrichtung (4) der Sortierungsplattform für die Rollen (21- 23) unter Ausnutzung der Breitendaten ausgewählt werden,
- die Rollen (21-23) zu Rollbahnen gebracht werden, die auf den ausgewählten Routen ausgebildet sind, und
- die Anschläge (2) zwischen den Halte- und Freigabepositionen bewegt werden, so dass die Rollen (21-23) über die Sortierungsplattform gemäß den ausgewählten Routen transportiert werden.

3. Verfahren nach Anspruch 1 oder 2, **dadurch gekennzeichnet, dass** die breiten Rollen (21, 23) und die schmalen Rollen (22) aufgenommen werden und die breiten Rollen (21, 23) und die schmalen Rollen (22) nacheinander über im Wesentlichen dieselbe Längsroute transportiert werden.

4. Verfahren nach einem der Ansprüche 1 bis 3, **dadurch gekennzeichnet, dass** Rollen (21-23), die zu zumindest drei verschiedenen Breitengruppen gehören, aufgenommen werden und, wenn die Routen der Rollen (21-23) ausgewählt werden, es versucht wird, dass der Leerraum, der zwischen den Rollen (21-23) auf der Sortierungsplattform verbleibt, minimiert wird.

5. Verfahren nach einem der Ansprüche 1 bis 4, **dadurch gekennzeichnet, dass**, wenn die Route für eine Rolle ausgewählt wird, eine Überprüfung gemacht wird, ob die Anschläge (2) eine geeignete Route für eine Rolle der Breite der betreffenden Rolle ausbilden, und, wenn die Anschläge (2) eine geeignete Route nicht ausbilden, die Anschläge (2) derart bewegt werden, dass eine geeignete Route auf der Sortierungsplattform für die betreffende Rolle ausgebildet wird.

6. Sortierungsplattform für Papier-, Karton- oder Faserstoffrollen (21-23), die eine Ebene (1) zum Transportieren von Rollen (21-23), eine Steuerungsvorrichtung (8), die zum Steuern von Positionen von Anschlägen (2) angeordnet ist, und die steuerbaren Anschläge (2) zum Halten von Rollen (21-23) an einer Stelle auf der Ebene (1) und zum Freigeben der Rollen zum Bewegen über die Ebene (1) aufweist, wobei die Anschläge (2) matrixartig über die Ebene (1) positioniert sind,
**dadurch gekennzeichnet, dass**
die Steuerungsvorrichtung (8) programmiert ist, um die Anschläge (2) zu steuern, um die Anschläge (2) zwischen deren Halte- und Freigabepositionen unabhängig zu bewegen, um frei auswählbare Routen für Rollen (21-23) mit verschiedenen Breiten auf der Ebene (1) auszubilden, um die Rollen (21-23) mit verschiedenen Breiten über die Ebene (1) entlang den frei auswählbaren Routen in der Längsrichtung (4) der Ebene (1) derart zu transportieren, dass breite Rollen (21, 23), die sich über zwei oder mehr benachbarte Anschläge (2) in der Querrichtung (6) der Ebene (1) erstrecken, über die benachbarten Anschläge, die eine der Längsrouten ausbilden, bewegt werden können und verschiedene schmale Rollen (22) nebeneinander auf derselben Längsroute geführt werden können und mit Hilfe dieser benachbarten Anschläge entlang der Route geführt werden.

7. Sortierungsplattform nach Anspruch 6, **dadurch gekennzeichnet, dass** zumindest eine Reihe (5) von Anschlägen (2) nahe dem unteren Rand (7) der Sortierungsplattform angeordnet ist und dass jeder Anschlag (2) eine Auffangeinrichtung (41) und eine Aufgabeeinrichtung (42) aufweist, die in einem Abstand voneinander in der Längsrichtung (4) angeordnet sind und die beide unabhängig voneinander zwischen den Halte- und Freigabepositionen frei bewegt werden können, so dass die Bewegung der Rollen (21-23) über den Anschlag (2) optional verhindert, frei zugelassen oder jeweils für eine einzelne Rolle zugelassen werden kann.

8. Sortierungsplattform nach Anspruch 6 oder 7, **gekennzeichnet durch** die Steuerungsvorrichtung (8), die programmiert ist, um die Anschläge (2) derart zu steuern, dass schmale Rollen (22), deren Breite korrespondierend zu der Hälfte oder zu einem kleineren Anteil der Breite der breiten Rollen (21) ist, über diese gleichen Anschläge (2) in zwei oder mehreren parallelen Bahnen korrespondierend transportiert werden können.

9. Sortierungsplattform nach einem der Ansprüche 6 bis 8, **dadurch gekennzeichnet, dass** die Anschläge (2) angeordnet sind, um zumindest eine Bahn (3) von Anschlägen auszubilden, in der die Anschläge (2) nacheinander in der Längsrichtung (4) angeordnet sind.

10. Sortierungsplattform nach einem der Ansprüche 6 bis 9, **dadurch gekennzeichnet, dass** zumindest eine Reihe (5) von Anschlägen (2) nahe dem unteren Rand (7) der Sortierungsplattform angeordnet ist, wobei diese Reihe (5) zumindest zwei, bevorzugt zumindest drei, unabhängig steuerbare Anschläge (2) aufweist.

11. Sortierungsplattform nach einem der Ansprüche 6 bis 10, **dadurch gekennzeichnet, dass** die Ebene (1) geneigt ist.

12. Sortierungsplattform nach einem der Ansprüche 6 bis 11, **dadurch gekennzeichnet, dass** sie Schubvorrichtungen zum Bewegen der Rollen (21-23) auf der Ebene (1) aufweist.

13. Sortierungsplattform nach einem der Ansprüche 6 bis 12, **dadurch gekennzeichnet, dass** sie Anschläge (2) aufweist, die nacheinander in der Längsrichtung (4) in zumindest drei parallelen Bahnen, d.h. einer mittleren Bahn, einer linken Bahn und einer rechten Bahn angeordnet sind.

14. Sortierungsplattform nach Anspruch 13, **dadurch gekennzeichnet, dass** die Steuerungsvorrichtung (8) programmiert ist, um die Anschläge (2) zum Handhaben von breiten (21), mittelbreiten (23) und schmalen Rollen (22) derart zu steuern, dass
- wenn breite Rollen (21) gehandhabt werden, die Steuerungsvorrichtung (8) die Anschläge (2) der linken Bahn und der rechten Bahn in die Freigabeposition bewegt und die Anschläge (2) der mittleren Bahn zwischen den Halte- und Freigabepositionen bewegt, um die breiten Rollen (21) wiederum an einer Stelle zu halten und wiederum diese zur Bewegung über die Ebene (1) freizugeben, so dass sich die Rollen (21-23) in einer einzelnen Bahn über die Anschläge (2) der mittleren Bahn, der linken Bahn und der rechten Bahn bewegen, die in die Freigabeposition bewegt worden sind,
- wenn mittelbreite Rollen (21) gehandhabt werden, die Steuerungsvorrichtung (8) die Anschläge (2) der mittleren Bahn in die Freigabeposition bewegt und die Anschläge (2) der linken Bahn und der rechten Bahn zwischen den Halte- und Freigabepositionen bewegt, um die mittelbreiten Rollen (23) an einer Stelle zu halten und um diese zum Bewegen über die Ebene (1) in zwei parallelen Bahnen freizugeben, und
- wenn die schmalen Rollen (22) gehandhabt werden, die Steuerungsvorrichtung (8) die Anschläge (2) jeder Bahn zwischen den Halte-und Freigabepositionen bewegt, um die schmalen Rollen (22) an einer Stelle zu halten und um diese zum Bewegen über die Ebene (1) in drei parallelen Bahnen freizugeben.

15. Sortierungsplattform nach einem der Ansprüche 6 bis 14, **dadurch gekennzeichnet, dass** sie Abbremsvorrichtungen, die auf dieselbe Weise wie die Anschläge (2) angeordnet sind, zum Verlangsamen der Geschwindigkeit der Rollen (21, 23) aufweist, die über die geneigte Ebene (1) rollen.

## Revendications

1. Procédé destiné à transporter des rouleaux de papier, de carton, ou de pâte (21-23) sur une plateforme de tri, qui comprend un plan (1) pour transporter les rouleaux (21-23) et des butées contrôlables (2) pour maintenir les rouleaux (21-23) en place sur le plan (1) et les libérer pour se déplacer sur le plan (1), où les butées (2) sont placées sous forme d'une matrice sur le plan (1), le procédé étant **caractérisé par** le fait de comprendre les étapes consistant
à former des trajets pouvant être librement sélectionnés dans la direction longitudinale (4) du plan (1) sur le plan (1) de la plateforme de tri à l'aide des butées (2) en actionnant les butées (2), à former des lignes de rouleau des rouleaux (21-23) de différentes largeurs sur les trajets, où des rouleaux larges (21, 23) s'étendent sur deux ou plusieurs butées adjacentes (2) dans la direction latérale, et à déplacer les butées (2) de manière indépendante entre leurs positions de maintien et de libération le long desdits trajets pouvant être librement sélectionnés dans la direction longitudinale du plan (1) de sorte que des rouleaux larges (21, 23) puissent se déplacer sur les butées adjacentes formant l'un desdits trajets longitudinaux et que plusieurs rouleaux étroits (22) les uns à côté des autres puissent être guidés au même trajet longitudinal et guidés à l'aide de ces butées adjacentes le long dudit trajet.

2. Procédé selon la revendication 1, **caractérisé en ce que**
des rouleaux et des données concernant la largeur des rouleaux (21-23) sont reçus,
des trajets dans la direction longitudinale (4) de la plateforme de tri sont sélectionnés pour les rouleaux (21-23), en exploitant les données concernant la largeur,
les rouleaux (21-23) sont amenés aux lignes de rouleau formées sur les trajets sélectionnés, et
les butées (2) sont déplacées entre les positions de maintien et de libération, de sorte que les rouleaux (21-23) soient transportés sur la plateforme de tri selon les trajets sélectionnés.

3. Procédé selon la revendication 1 ou 2, **caractérisé en ce que** les rouleaux larges (21, 23) et les rouleaux étroits (22) sont reçus et les rouleaux larges (21, 23) et les rouleaux étroits (22) sont transportés de manière consécutive essentiellement sur le même trajet longitudinal.

4. Procédé selon l'une des revendications 1-3, **caractérisé en ce que** des rouleaux (21-23) appartenant à au moins trois groupes de différentes largeurs sont reçus, et lors d'une sélection des trajets des rouleaux (21-23), on cherche à ce que l'espace vide restant entre les rouleaux (21-23) sur la plateforme de tri soit réduit au minimum.

5. Procédé selon l'une des revendications 1-4, **caractérisé en ce que**, lors d'une sélection du trajet pour un rouleau, une vérification est faite pour savoir si les butées (2) forment un trajet approprié pour un rouleau de la largeur du rouleau en question et, si les butées (2) ne forment pas un trajet approprié, les butées (2) sont déplacées de manière à ce qu'un trajet approprié soit formé sur la plateforme de tri pour le rouleau en question.

6. Plateforme de tri pour des rouleaux de papier, de carton, ou de pâte (21-23), comprenant un plan (1) pour transporter des rouleaux (21-23), un dispositif de commande (8) disposé pour commander des positions de butées (2) et les butées contrôlables (2) pour maintenir des rouleaux (21-23) en place sur le plan (1) et les libérer pour se déplacer sur le plan (1), où les butées (2) sont placées sous forme de matrice sur le plan (1), **caractérisée en ce que**
le dispositif de commande (8) est programmé pour commander les butées (2) pour déplacer de manière indépendante les butées (2) entre leurs positions de maintien et de libération pour former des trajets pouvant être librement sélectionnés pour des rouleaux (21-23) de différentes largeurs sur le plan (1) afin de transporter lesdits rouleaux (21-23) de différentes largeurs sur le plan (1) le long desdits trajets pouvant être librement sélectionnés dans la direction longitudinale (4) du plan (1) de sorte que les rouleaux larges (21, 23), s'étendant sur deux ou plusieurs butées adjacentes (2) dans la direction latérale (6) du plan (1), puissent se déplacer sur les butées adjacentes formant l'un desdits trajets longitudinaux et que plusieurs rouleaux étroits (22) les uns à côté des autres puissent être guidés au même trajet longitudinal et guidés à l'aide de ces butées adjacentes le long dudit trajet.

7. Plateforme de tri selon la revendication 6, **caractérisée en ce qu'**au moins une rangée (5) de butées (2) est située à proximité du bord inférieur (7) de la plateforme de tri et **en ce que** chaque butée (2) comprend un collecteur (41) et un dispositif d'alimentation (42), qui sont situés à une distance séparant l'un de l'autre dans la direction longitudinale (4) et qui peuvent tous deux se déplacer librement de manière indépendante l'un de l'autre entre les positions de maintien et de libération, de sorte que le mouvement des rouleaux (21-23) sur la butée (2) puisse être éventuellement empêché, librement autorisé ou autorisé à un rouleau à la fois.

8. Plateforme de tri selon la revendication 6 ou 7, **caractérisée par** le dispositif de commande (8), qui est programmé pour commander les butées (2) de manière à ce que des rouleaux étroits (22), dont la largeur correspond à une moitié ou à une fraction plus petite de la largeur desdits rouleaux larges (21), puissent être transportés de manière correspondante sur ces mêmes butées (2) en deux ou plusieurs lignes parallèles.

9. Plateforme de tri selon l'une des revendications 6-8, **caractérisée en ce que** les butées (2) sont disposées pour former au moins une ligne (3) de butées, dans laquelle les butées (2) sont disposées de manière consécutive dans la direction longitudinale (4).

10. Plateforme de tri selon l'une des revendications 6-9, **caractérisée en ce qu'**au moins une rangée (5) de butées (2) est située à proximité du bord inférieur (7) de la plateforme de tri, cette rangée (5) comprend au moins deux, de préférence au moins trois butées contrôlables de manière indépendante (2).

11. Plateforme de tri selon l'une des revendications 6-10, **caractérisée en ce que** le plan (1) est incliné.

12. Plateforme de tri selon l'une des revendications 6-11, **caractérisée en ce qu'**elle comprend des poussoirs pour déplacer les rouleaux (21-23) sur le plan (1).

13. Plateforme de tri selon l'une des revendications 6-12, **caractérisée en ce qu'**elle comprend des butées (2) situées de manière consécutive dans la direction longitudinale (4) dans au moins trois lignes parallèles, c'est à dire une ligne centrale, une ligne à gauche, et une ligne à droite.

14. Plateforme de tri selon la revendication 13, **caractérisée en ce que** le dispositif de commande (8) est programmé pour commander les butées (2) afin de manipuler des rouleaux larges (21), de largeurs moyennes (23) et étroits (22), de manière à ce que
lors de la manipulation de rouleaux larges (21), le dispositif de commande (8) déplace les butées (2) des lignes à gauche et à droite à la position de libération et déplace les butées (2) de la ligne centrale entre les positions de maintien et de libération, afin de maintenir à leur tour les rouleaux larges (21) en place et de les libérer à leur tour pour se déplacer sur le plan (1), de sorte que les rouleaux (21-23) se déplacent en une seule ligne sur les butées (2) de la ligne centrale, la ligne à gauche, et la ligne à droite, qui ont été déplacées vers la position de libération,
lors de la manipulation des rouleaux de largeurs moyennes (23), le dispositif de commande (8) déplace les butées (2) de la ligne centrale à la position de libération et déplace les butées (2) des lignes à gauche et à droite entre les positions de maintien et de libération, afin de maintenir les rouleaux de largeurs moyennes (23) en place et de les libérer pour se déplacer sur le plan (1) en deux lignes parallèles, et
lors de la manipulation des rouleaux étroits (22), le dispositif de commande (8) déplace les butées (2) de chaque ligne entre les positions de maintien et de libération, pour maintenir les rouleaux étroits (22) en place et pour les libérer pour se déplacer sur le plan (1) en trois lignes parallèles.

15. Plateforme de tri selon l'une des revendications 6-14, **caractérisée en ce qu'**elle comprend des ralentisseurs situés de la même manière que les butées (2), pour ralentir la vitesse des rouleaux (21, 23) roulant sur le plan incliné (1).
